# EUROPEAN PATENT SPECIFICATION

(11) **EP 4 410 584 B1**
(45) Date of publication and mention of the grant of the patent: **28.10.2026**
(21) Application number: 23220423.0
(22) Date of filing: 28.12.2023
(51) Int. Cl.: B60K 35/10, B60K 35/22, B60K 35/28, B60K 35/29, G01C 21/36, G06F 3/01

(54) **AUTOMOTIVE DISPLAY**
ANZEIGE FÜR KRAFTFAHRZEUGE
DISPOSITIF D'AFFICHAGE POUR VÉHICULE AUTOMOBILE

(30) Priority: 31.01.2023 JP 2023013052
(43) Date of publication of application: 07.08.2024
(73) Proprietor: Suzuki Motor Corporation, Hamamatsu-shi, Shizuoka 432-8611 (JP)
(72) Inventor: SUZUKI, Takahiro, HAMAMATSU-SHI, 432-8611 (JP); SUNDA, Takashi, HAMAMATSU-SHI, 432-8611 (JP); KOMATA, Akane, HAMAMATSU-SHI, 432-8611 (JP); OTA, Honoka, HAMAMATSU-SHI, 432-8611 (JP)
(74) Representative: Plasseraud IP

(56) References cited:
- DE-A1- 102013 002 891
- JP-A- 2014 094 639
- US-A1- 2022 147 233

## Description

### [Technical Field]

The present invention relates to an automotive display.

### [Background Art]

JP2020170442A describes an information processing apparatus that changes a design of a content display region on the basis of a date and time when a user has registered an electronic payment application, user information, and user location information. JP2014094639A describes another relevant prior art.

### [Summary of Invention]

### [Problem to be Solved by the Invention]

In view of the need for an automotive display with enhanced user convenience, an object of the present invention is to provide such an automotive display.

### [Means for Solving the Problem]

An automotive display according to the present invention is an automotive display of a touch panel type or a touchless panel type, the automotive display including, on a screen of the automotive display: a meter area arranged in an upper part and displays automotive meters; a tab area arranged in a lower part and displays tabs of vehicle function pages with reduced sizes; and an enlarged display area arranged between the meter area and the tab area and displays the function pages in an enlarged manner, in which once an operation of sliding one of the tabs displayed in the tab area upward on the screen is received, one of the vehicle function pages corresponding to the tab is displayed in an enlarged manner in the enlarged display area, and once an operation of sliding the vehicle function page displayed in an enlarged manner in the enlarged display area downward on the screen is received, the vehicle function page is reduced in size, and the tab of the vehicle function page is displayed in the tab area.

### [Advantageous Effect of Invention]

According to the present invention, it is possible to provide an automotive display with enhanced user convenience.

### [Brief Description of Drawings]

[Figure 1] Figure 1 is a block diagram illustrating a configuration of an in-vehicle system.
[Figure 2] Figure 2 is an explanatory diagram illustrating an example of a screen.
[Figure 3] Figure 3 is an explanatory diagram illustrating an example of a screen.
[Figure 4] Figure 4 is a flowchart illustrating a flow of animation display processing.
[Figure 5] Figure 5 is an explanatory diagram illustrating an example of a screen.
[Figure 6] Figure 6 is an explanatory diagram illustrating an example of a screen.
[Figure 7] Figure 7 is an explanatory diagram illustrating an example of a screen.
[Figure 8] Figure 8 is a flowchart illustrating a flow of processing in accordance with SOC.
[Figure 9] Figure 9 is an explanatory diagram illustrating an example of a computer hardware configuration of an automotive display.
[Figure 10] Figure 10 is an explanatory diagram illustrating an example of a software configuration of the automotive display.

### [Mode for Carrying Out the Invention]

Hereinafter, the present invention will be described on the basis of illustrated embodiments. However, the present invention is not limited to the embodiments described below.

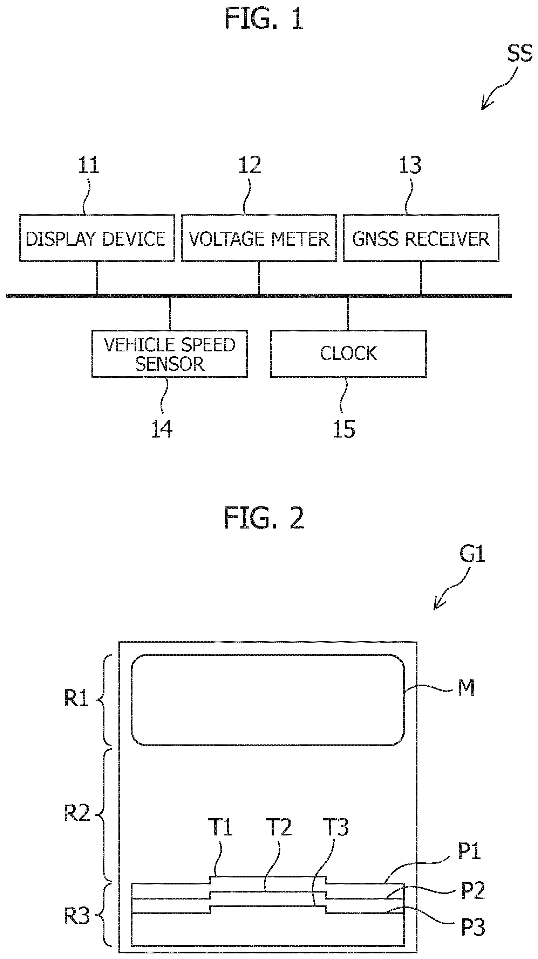

As illustrated in Figure 1, an in-vehicle system SS mounted in an automobile includes a display 11 for an automobile, a voltage meter 12 that measures a voltage of an in-vehicle battery mounted in the automobile, a global navigation satellite system (GNSS) receiver 13, a vehicle speed sensor 14 that detects a speed of the automobile, and a clock 15.

The display 11 is provided in an interior of the automobile and can be provided as a part of an instrument panel, for example. The display 11 can be of a touch panel type.

Figure 2 illustrates a rectangular screen G1 that is displayed on a screen display section of the display 11. The screen is divided into three rectangular regions aligned in the up-down direction and has an upper region R1, an intermediate region R2, and a lower region R3. In the upper region R1, a meter display region M for a speedometer and a tachometer is provided. The intermediate region R2 is blank in the screen G1. In the lower region R3, size-reduced rectangular function pages P1, P2, and P3 are displayed in an overlapping manner, and tabs T1, T2, and T3 (which will be described later) are displayed in an aligned manner in the up-down direction.

The function pages P1, P2, and P3 are pages for an occupant to display and operate vehicle functions. In one example, the function page P1 is a page for a car navigation function, the function page P2 is a page for an audio function, and the function page P3 is a page for an AC function. The tabs T1, T2, and T3 are provided on the upper sides of the function pages P1, P2, and P3, respectively.

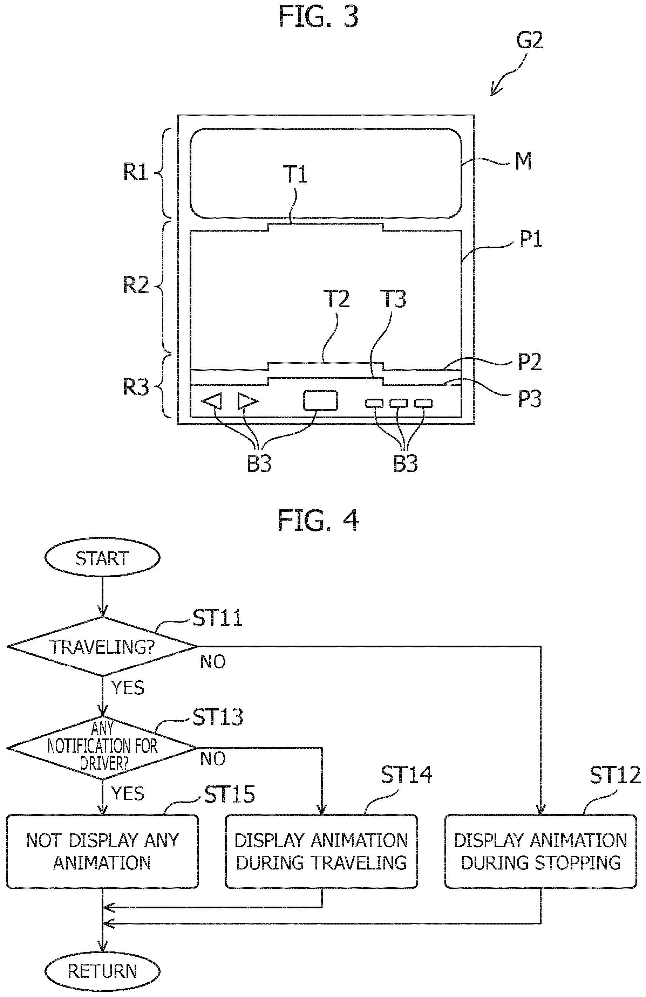

Once a user performs an operation of sliding the screen upward in a state in which the tab T1 on the screen G1 is touched, the screen is switched to a screen G2 illustrated in Figure 3. In the screen G2, the function page P1 provided with the tab T1 is displayed in an enlarged manner in the intermediate region R2.

Once an operation of sliding the screen downward in a state in which the tab T1 on the screen G2 is touched is performed by the user, the screen is switched to the screen G1 illustrated in Figure 2.

Although the tab T1 was described as an example, the same applies to the tabs T2 and T3, and it is possible to perform switching from one of enlarged display and size-reduced display of a corresponding vehicle function page to the other.

Figure 4 illustrates a flow of processing performed by a processor included in the display 11.

In Step ST 11, a control unit determines whether or not the subject vehicle is traveling on the basis of a detection result of at least one of the vehicle speed sensor 14, a preceding vehicle detection section (which will be described later), and a traffic light detection section (which will be described later). Step ST13 is then performed in a case in which it is determined that the subject vehicle is traveling, or Step ST12 is performed otherwise.

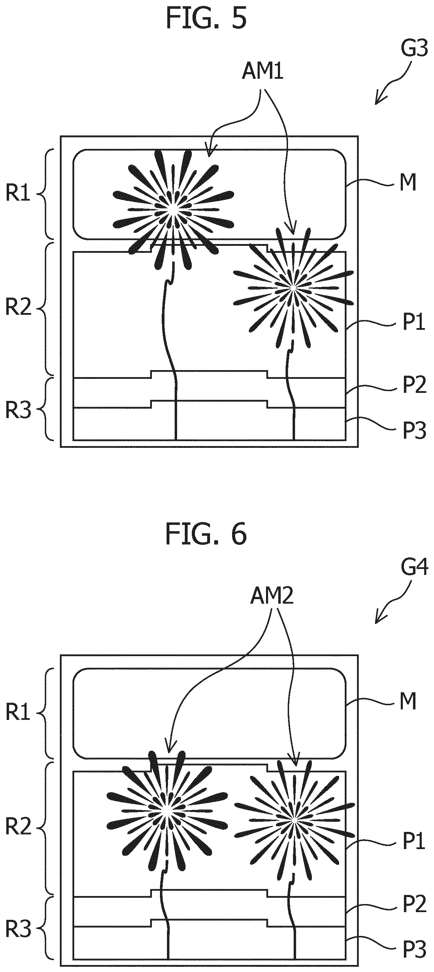

In Step ST12, the control unit controls display of the display 11 to a screen G3 illustrated in Figure 5. Specifically, a firework animation AM1 is displayed over the entire upper region R1, the intermediate region R2, and the lower region R3. A launch speed and burst speed of the firework animation AM1 are relatively high. After this step, return processing is performed.

In Step ST13, the control unit determines whether or not there is a message which a driver of the subject vehicle is to be notified of. An example of the message is a message indicating that an antiskid prevention device mounted in the subject vehicle is being operated. Step ST15 is then performed in a case in which it is determined that there is a message, or Step ST14 is performed otherwise.

In Step ST14, the control unit controls display of the display 11 to a screen G4 illustrated in Figure 6. Specifically, a firework animation AM2 is displayed across the intermediate region R2 and the lower region R3. The firework animation AM2 is not displayed in the upper region R1 in which the meter display region M is provided. The launch speed and the burst speed of the firework animation AM2 are lower than those of the firework animation AM1. After this step, return processing is performed.

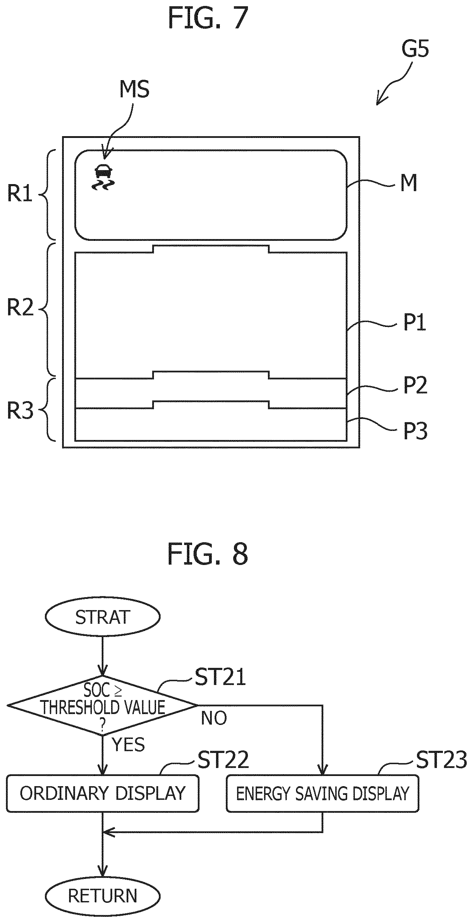

In Step ST15, the control unit controls display of the display 11 to a screen G5 illustrated in Figure 7. Specifically, a message MS is displayed in the meter display region M while no animation is displayed therein. After this step, return processing is performed.

Figure 8 illustrates a flow of different processing (processing in accordance with SOC) performed by the control unit included in the display 11.

In Step S21, the control device determines whether or not SOC (state of charge) of an in-vehicle battery is equal to or greater than a predetermined threshold value.

Step ST22 is then performed in a case in which it is determined that the SOC is equal to or greater than the predetermined threshold value, or Step ST23 is performed otherwise.

In Step ST22, the control device performs ordinary display. After this step, return processing is performed.

In Step ST23, the control device performs energy saving display. Specifically, the animation speed is reduced, and the background color is changed to a color suitable for saving energy. For example, it is possible to change the color from a chromatic color to an achromatic color. After this step, return processing is performed.

It is possible to automatically change the display background (color, pattern, animation, and the like) depending on location, time, season, an individual, and the like. Examples are as follows.
a) An animation display region and a motion speed are changed in accordance with a traveling state such as during stopping or during traveling.
b) In regard to a motion speed of an animation, the speed of the motion of the animation during traveling is less than that during stopping. In a case in which there is a notification for the driver, the animation can be in a non-display state.
c) An animation can be displayed over the entire screen including the meter display region during stopping, while an animation can be displayed in the regions other than the meter display region during traveling.
d) Timing for switching display during traveling and during stopping is as follows.

When switching from a stopped state to a traveling state

In a case in which a preceding vehicle is present, the subject vehicle is regarded as traveling even if the vehicle speed of the subject vehicle is zero at the time when the preceding vehicle starts to travel.

In a case in which no preceding vehicle is present, the subject vehicle is regarded as traveling even if the vehicle speed is zero at the time when the signal of the traffic light is changed from a red light to a green light. In a case in which there is no traffic light, the vehicle is regarded as traveling when the speed detected by the vehicle speed sensor is non-zero.

At the time of switching from a state during traveling to a state during stopping

The subject vehicle is regarded as stopping at the time when the vehicle speed detected by the vehicle speed sensor becomes zero. If the subject vehicle is determined to be stopping, the animation display region and the speed are changed gradually.

e) The background (color, pattern, animation, and the like) is changed depending on a state of charge (SOC) of the vehicle.

In a case in which the SOC is relatively low, the animation speed is reduced, and the background color is changed to a color suitable for saving energy.

According to a) above, it is possible to prevent the animation from interrupting the driver who is driving the vehicle.

According to b) above, the animation speed during traveling is relatively low, and it is thus possible to drive the vehicle more safely with a sense of security.

According to c) above, no animation is displayed in a part (meter display region) that the driver often views during driving, and the driver can drive the vehicle while being less distracted.

According to d) above, the switching from the state during stopping to the state during traveling occurs earlier, and it is thus possible to reduce a likelihood that the animation display region and the speed change after the vehicle speed becomes non-zero. It is possible to make the driver less distracted.

Since sudden switching does not occur when the state during traveling is changed to the state during stopping, it is possible to make the driver less inattentive.

According to e) above, it is possible to change the display in accordance with the state of charge and thereby saving energy as needed.

The background can be freely changed when a parking brake is operated before the state during traveling is achieved after an ignition key is turned on. Since higher safety is still achieved even if the background is changed often, it is possible to prevent the driver from being bored by changing the background in a slideshow manner under such a condition.

Energy saving display is performed during idling stop.

According to the aforementioned embodiment, it is possible to effectively use the intermediate region and the lower region located further downward than the upper region in which the meter display region is present as regions for enlarged display or size-reduced display of the function pages provided with the tabs.

It is possible to easily achieve a change from one of the enlarged display and the size-reduced display of the vehicle function pages to the other by a tab operation. Operability and comfort are improved.

Additionally, it is possible to save a display state (enlarged display or size-reduced display) of the vehicle function pages when the ignition key is turned off. It is possible to bring the display state of the vehicle function pages into the same display state as the saved display state when the ignition key is turned on again.

The animation speed can be set such that the speed is the highest when the vehicle is being stopped and no operation is being performed, is the second highest, when the vehicle is being stopped and an operation is being performed, and is the lowest when the vehicle is traveling.

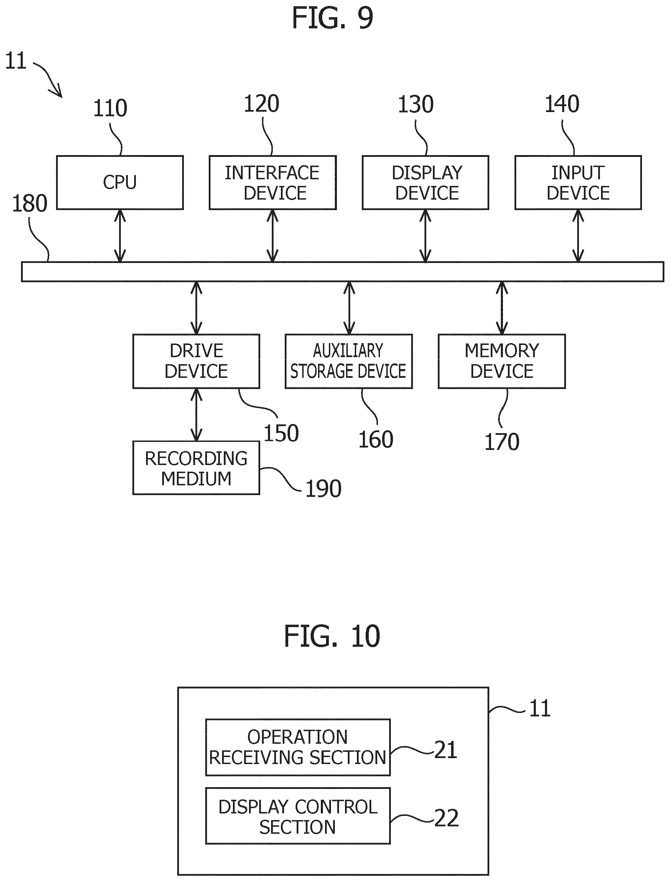

Figure 9 illustrates a computer hardware configuration example of the automotive display 11. The automotive display 11 includes a CPU (processor) 110, an interface device 120, a display device 130, an input device 140, a drive device 150, an auxiliary storage device 160, and a memory device 170, and these are connected to each other via a bus 180.

A program that realizes the functions of the automotive display 11 is provided by a recording medium 190 such as a CD-ROM. Once the recording medium 190 recording the program is set in the drive device 150, the program is installed in the auxiliary storage device 160 from the recording medium 190 via the drive device 150. Alternatively, the installation of the program is not necessarily performed using the recording medium 190 and can also be performed through a network. The auxiliary storage device 160 stores the installed program and stores necessary files, data, and the like.

The memory device 170 reads the program from the auxiliary storage device 160 and stores the program in a case in which an instruction for activating the program is provided. The CPU 110 realizes the functions of the automotive display 11 in accordance with the program stored in the memory device 170. The interface device 120 is used as an interface for establishing connection to another computer through a network. The display device 130 displays a graphical user interface (GUI) or the like based on the program. An example of the GUI is as described above. The input device 140 is a touch panel or the like.

Figure 10 illustrates a configuration example of software functions of the automotive display 11. The automotive display 11 includes an operation receiving section 21 that receives user operations (a sliding operation and the like) and a display control section 22 that controls display on the screen in accordance with the operations received by the operation receiving section 21. The display control section 22 can also control the display on the screen on the basis of data received from at least one of the voltage meter 12, the GNSS receiver 13, the vehicle speed sensor 14, and the clock 15.

The automotive display 11 may further include a preceding vehicle detection section and a traffic light detection section, which will be described later. In this case, the display control section 22 can also control the display on the screen on the basis of detection information of the preceding vehicle detection section and the traffic light detection section.

Unnecessary inputs to the automotive display are reduced by shortening the user operation time and reducing inconvenience, and it is thus possible to reduce arithmetic operation load of the automotive display.

The display 11 is not limited to one of a touch panel type and may be one of a touchless panel type (a model that can be operated merely by locating a finger close to the panel without direct contact therewith).

In regard to the modes described hitherto, the following supplements will be disclosed.

### Supplement A1

An automotive display of a touch panel type or a touchless panel type, the automotive display including:
on a screen of the automotive display: a meter area arranged in an upper part and displays automotive meters; a tab area arranged in a lower part and displays tabs of vehicle function pages with reduced sizes; and an enlarged display area arranged between the meter area and the tab area and displays the vehicle function pages in an enlarged manner,
once an operation of sliding one of the tabs displayed in the tab area upward on the screen is received, one of the vehicle function pages corresponding to the tab is displayed in an enlarged manner in the enlarged display area, and
once an operation of sliding the vehicle function page displayed in an enlarged manner in the enlarged display area downward on the screen is received, the vehicle function page is reduced in size, and the tab of the vehicle function page is displayed in the tab area.

### Advantages of Supplement A1

It is possible to effectively use the regions located further downward than the meter area provided in the upper part by the tabs and the vehicle function page displayed in an enlarged manner.

It is possible to operate the functions with the vehicle function page reduced in size by a tab operation or with the vehicle function page displayed in an enlarged manner by an easy sliding operation as needed. Operability and comfort are thus improved.

### Supplement A2

The automotive display according to Supplement A1, in which
when an ignition key is turned off and the automotive display is not displayed, a display state of the vehicle function pages immediately before a non-display state is achieved is saved, and
when the ignition key is turned on and the automotive display is displayed again, the vehicle function pages are displayed in the same display state as the saved display state.

### Advantages of Supplement A2

If a vehicle function page is displayed in an enlarged manner immediately before the ignition key is turned off, the vehicle function page is displayed in an enlarged manner when the ignition key is turned on again. If the vehicle function page is displayed in a size-reduced manner immediately before the ignition key is turned off, the vehicle function page is displayed in a size-reduced manner when the ignition key is turned on again. Since the display state before the ignition key was previously turned off is held in this manner, satisfactory usability of the user is achieved.

In a case in which the display state before the ignition key was previously turned off is not held, the user who desires to frequently operate an AC function, for example, must perform an operation of enlarging the AC function screen every time the ignition key is turned on, which is inconvenient.

The user feels comfortable since the vehicle function page displayed in an enlarged manner when the ignition key was turned off is displayed in an enlarged manner from the beginning when the ignition key is turned on again by the display state before the ignition key was previously turned off being held. The user does not have to perform unnecessary operations, and operation efficiency is thus improved. Since unnecessary operations are reduced, the amount of processing performed by software of the automotive display is also reduced.

### Supplement A3

The automotive display according to Supplement A1, in which
once an operation of sliding one of the tabs displayed in the tab area upward on the screen is received,
an upper end of one of the vehicle function pages corresponding to the tab automatically moves to an upper end of the enlarged display area without stopping in the middle and the vehicle function page is displayed in an enlarged manner in the enlarged display area, and
once an operation of sliding the tabs of the vehicle function page displayed in an enlarged manner in the enlarged display area downward on the screen is received, the upper end of the vehicle function page automatically moves to the tab area without stopping in the middle.

### Advantages of Supplement A3

It is possible to instantly achieve a change from one of the enlarged display and the size-reduced display of the vehicle function pages by a tab operation in the up-down direction.

It is possible to maintain user driving and comfort while the display of the meters is maintained regardless of the display state of the vehicle function pages. It is also possible to display the vehicle function pages in an enlarged manner.

There are only two display states of the vehicle function pages, namely, size-reduced display and enlarged display, and the vehicle function pages do not stop in a halfway display state that is neither the enlarged display nor the size-reduced display (for example, a state in which the vehicle function pages are displayed with a size of about half the size of the enlarged display). Therefore, the vehicle function pages are immediately displayed in an enlarged manner by sliding the tabs of the vehicle function pages when the user desires to perform enlarged display. As a result, it is possible to immediately perform an operation of a function that the user desires to use.

The same applies to a case in which switching from the enlarged display to the size-reduced display is performed, and the display does not stop in a halfway display state that is neither the enlarged display nor the size-reduced display. Therefore, it is possible to quickly switch the target vehicle function page to size-reduced display.

### Supplement A4

The automotive display according to Supplement A1, in which an animation is displayed under a specific condition when all the vehicle function pages are displayed in a size-reduced manner.

### Advantages of Supplement A4

Since animation is displayed between the meter area and the tab area on the display instead of nothing being displayed there when all the vehicle function pages are displayed in a size-reduced manner, it is possible to improve comfort of the user who views the animation.

The user can enjoy the display of the animation by displaying all the vehicle function pages in a size-reduced manner, and comfort is improved.

No animation is displayed once any of the tabs of the vehicle function pages is slid and the corresponding vehicle function page is displayed in an enlarged manner. Therefore, it is possible to enhance operation efficiency without interrupting operations on the vehicle function page.

In a case in which the ignition key is switched from ON to OFF in a state in which the animation is being displayed, the animation is displayed again when the ignition key is turned on next time. Therefore, it is not necessary for the user who displays and enjoy the animation to perform unnecessary operations to display the animation every time the ignition key is turned on.

A specific condition may be at least one of a location of the vehicle, a clock time, a season, a user, and the like.

### Supplement A5

The automotive display according to Supplement A4, in which a speed of the animation is higher during stopping than during traveling of an automobile with the automotive display mounted therein.

### Advantages of Supplement A5

It is possible to reduce the likelihood that the user will be distracted during driving by setting a relatively low speed for the animation during traveling.

The user can enjoy a difference in animation during stopping and during traveling, and comfort is improved.

### Supplement A6

The automotive display according to the invention comprises the following features
a plurality of the vehicle function pages are displayed in a superimposed manner in the tab area, and
a simplified function operation button is displayed in a vehicle function page located on the frontmost side, and
when the function operation button is being operated, the animation is displayed at a lower speed than a speed when no operation is being performed on the function operation button, or the animation is not displayed.

### Advantages of Supplement A6

For the vehicle function page located on the frontmost side (the vehicle function page P3 for the AC function in Figure 3, for example) from among the plurality of vehicle function pages displayed in a size-reduced manner in the tab area, it is possible to perform simple function operations by using a simplified function operation button (a button B3 on the vehicle function page P3 in Figure 3). It is possible to reduce a likelihood that the animation interrupts user operation by setting a relatively low animation speed or by not displaying any animation during the simple function operation.

### [Reference Signs List]

SS In-vehicle system
11 Display
12 Voltage meter
13 GNSS receiver
14 Vehicle speed sensor
15 Clock
21 Operation receiving section
22 Display control section
G1 to G5 Screen
T1 to T3 Tab
P1 to P3 Vehicle function page
R1 to R3 Region
M Meter display region
AM1, AM2 Animation
MS Message
**MS** Message

## Claims

1. An automotive display (11) of a touch panel type or a touchless panel type which is a model that can be operated merely by locating a finger close to a panel, without direct contact therewith, the automotive display comprising, on a screen of the automotive display:
a meter area arranged in an upper part and displays automotive meters;
a tab area (R3) arranged in a lower part and displays tabs (T1-T3) of vehicle function pages (P1-P3) with reduced sizes; and
an enlarged display area (R2) arranged between the meter area and the tab area and displays the vehicle function pages in an enlarged manner, wherein
once an operation of sliding one of the tabs displayed in the tab area upward on the screen is received, one of the vehicle function pages corresponding to the tab is displayed in an enlarged manner in the enlarged display area, and
once an operation of sliding the vehicle function page displayed in an enlarged manner in the enlarged display area downward on the screen is received, the vehicle function page is reduced in size, and the tab of the vehicle function page is displayed in the tab area,
a plurality of the vehicle function pages are displayed in a superimposed manner in the tab area (R3),
a simplified function operation button (B3) is displayed in a vehicle function page located on a frontmost side from among the plurality of vehicle function pages and when the simplified function operation button is being operated, the animation is displayed at a lower speed than a speed when no operation is being performed on the function operation button, or the animation is not displayed.

2. The automotive display as claimed in claim 1, wherein
when an ignition key is turned off and the automotive display is not displayed, a display state of the vehicle function pages (P1-P3) immediately before a non-display state is achieved is saved, and
when the ignition key is turned on and the automotive display is displayed again, the vehicle function pages (P1-P3) are displayed in a same display state as the saved display state.

3. The automotive display as claimed in claim 1, wherein
once an operation of sliding one of the tabs (T1-T3) displayed in the tab area upward on the screen is received, an upper end of one of the vehicle function pages corresponding to the tab automatically moves to an upper end of the enlarged display area without stopping in the middle, and the vehicle function page is displayed in an enlarged manner in the enlarged display area, and
once an operation of sliding the tab (T1-T3) of the vehicle function page (P1-P3) displayed in an enlarged manner in the enlarged display area downward on the screen is received, the upper end of the vehicle function page automatically moves to the tab area without stopping in the middle.

4. The automotive display as claimed in claim 1, wherein an animation is displayed under a specific condition when all the vehicle function pages (P1-P3) are displayed in a size-reduced manner.

5. The automotive display as claimed in claim 4, wherein a speed of the animation is higher during stopping than during traveling of an automobile with the automotive display mounted therein.

## Patentansprüche

1. Kraftfahrzeug-Anzeige (11) eines Berührungsbildschirmtyps oder eines berührungslosen Paneltyps, die ein Modell ist, das lediglich durch Platzieren eines Fingers nahe an einem Panel ohne direkten Kontakt damit bedient werden kann, wobei die Kraftfahrzeug-Anzeige auf einem Bildschirm der Kraftfahrzeug-Anzeige Folgendes umfasst:
einen Anzeigenbereich, der in einem oberen Teil angeordnet ist und Kraftfahrzeug-Anzeigen anzeigt;
einen Registerkartenbereich (R3), der in einem unteren Teil angeordnet ist und Registerkarten (T1-T3) von Fahrzeugfunktionsseiten (P1-P3) mit reduzierten Größen anzeigt; und
einen vergrößerten Anzeigebereich (R2), der zwischen dem Anzeigenbereich und dem Registerkartenbereich angeordnet ist und die Fahrzeugfunktionsseiten in einer vergrößerten Weise anzeigt, wobei
sobald eine Operation des Schiebens einer der in dem Registerkartenbereich angezeigten Registerkarten nach oben auf dem Bildschirm empfangen wird, eine der Fahrzeugfunktionsseiten, die der Registerkarte entspricht, in einer vergrößerten Weise in dem vergrößerten Anzeigebereich angezeigt wird, und
sobald eine Operation des Schiebens der in einer vergrößerten Weise in dem vergrößerten Anzeigebereich angezeigten Fahrzeugfunktionsseite nach unten auf dem Bildschirm empfangen wird, die Fahrzeugfunktionsseite in der Größe reduziert wird und die Registerkarte der Fahrzeugfunktionsseite in dem Registerkartenbereich angezeigt wird,
eine Vielzahl der Fahrzeugfunktionsseiten in einer überlagerten Weise in dem Registerkartenbereich (R3) angezeigt wird,
eine vereinfachte Funktionsbedientaste (B3) auf einer Fahrzeugfunktionsseite angezeigt wird, die sich auf einer am weitesten vorne liegenden Seite aus der Vielzahl von Fahrzeugfunktionsseiten befindet, und, wenn die vereinfachte Funktionsbedientaste bedient wird, die Animation mit einer geringeren Geschwindigkeit als einer Geschwindigkeit, wenn keine Operation an der Funktionsbedientaste durchgeführt wird, angezeigt wird oder die Animation nicht angezeigt wird.

2. Kraftfahrzeug-Anzeige nach Anspruch 1, wobei, wenn
ein Zündschlüssel ausgeschaltet wird und die Kraftfahrzeug-Anzeige nicht angezeigt wird, ein Anzeigezustand der Fahrzeugfunktionsseiten (P1-P3) unmittelbar vor dem Erreichen eines Nicht-Anzeigezustands gespeichert wird, und
wenn der Zündschlüssel eingeschaltet wird und die Kraftfahrzeug-Anzeige wieder angezeigt wird, die Fahrzeugfunktionsseiten (P1-P3) in einem gleichen Anzeigezustand wie der gespeicherte Anzeigezustand angezeigt werden.

3. Kraftfahrzeug-Anzeige nach Anspruch 1, wobei:
sobald eine Operation des Schiebens einer der in dem Registerkartenbereich angezeigten Registerkarten (T1-T3) nach oben auf dem Bildschirm empfangen wird, sich ein oberes Ende einer der Fahrzeugfunktionsseiten, die der Registerkarte entspricht, automatisch zu einem oberen Ende des vergrößerten Anzeigebereichs bewegt, ohne in der Mitte anzuhalten, und die Fahrzeugfunktionsseite in einer vergrößerten Weise in dem vergrößerten Anzeigebereich angezeigt wird, und
sobald eine Operation des Schiebens der Registerkarte (T1-T3) der in einer vergrößerten Weise in dem vergrößerten Anzeigebereich angezeigten Fahrzeugfunktionsseite (P1-P3) nach unten auf dem Bildschirm empfangen wird, sich das obere Ende der Fahrzeugfunktionsseite automatisch zu dem Registerkartenbereich bewegt, ohne in der Mitte anzuhalten.

4. Kraftfahrzeug-Anzeige nach Anspruch 1, wobei unter einer bestimmten Bedingung eine Animation angezeigt wird, wenn alle Fahrzeugfunktionsseiten (P1-P3) in einer größenreduzierten Weise angezeigt werden.

5. Kraftfahrzeug-Anzeige nach Anspruch 4, wobei eine Geschwindigkeit der Animation während des Stillstands höher ist als während der Fahrt eines Kraftfahrzeugs, in dem die Kraftfahrzeug-Anzeige montiert ist.

## Revendications

1. Affichage pour automobile (11) d'un type panneau tactile ou d'un type panneau sans contact qui est un modèle pouvant être actionné simplement en plaçant un doigt à proximité d'un panneau, sans contact direct avec celui-ci, l'affichage pour automobile comprenant, sur un écran de l'affichage pour automobile :
une zone de compteurs agencée dans une partie supérieure et qui affiche des compteurs d'automobile ;
une zone d'onglets (R3) agencée dans une partie inférieure et qui affiche des onglets (T1-T3) de pages de fonctions de véhicule (P1-P3) avec des tailles réduites ; et
une zone d'affichage agrandie (R2) agencée entre la zone de compteurs et la zone d'onglets et qui affiche les pages de fonctions de véhicule de manière agrandie, dans lequel
une fois qu'un actionnement consistant à faire glisser l'un des onglets affichés dans la zone d'onglets vers le haut sur l'écran est reçu, l'une des pages de fonctions de véhicule correspondant à l'onglet est affichée de manière agrandie dans la zone d'affichage agrandie, et
une fois qu'un actionnement consistant à faire glisser la page de fonctions de véhicule affichée de manière agrandie dans la zone d'affichage agrandie vers le bas sur l'écran est reçu, la page de fonctions de véhicule est réduite en taille, et l'onglet de la page de fonctions de véhicule est affiché dans la zone d'onglets,
une pluralité de pages de fonctions de véhicule sont affichées de manière superposée dans la zone d'onglets (R3),
un bouton d'actionnement de fonction simplifié (B3) est affiché dans une page de fonctions de véhicule située sur un côté le plus en avant parmi la pluralité de pages de fonctions de véhicule et, lorsque le bouton d'actionnement de fonction simplifié est actionné, l'animation est affichée à une vitesse inférieure à une vitesse lorsqu'aucun actionnement n'est effectué sur le bouton d'actionnement de fonction, ou l'animation n'est pas affichée.

2. Affichage pour automobile selon la revendication 1, dans lequel,
lorsqu'une clé de contact est coupée et que l'affichage pour automobile n'est pas affiché, un état d'affichage des pages de fonctions de véhicule (P1-P3) immédiatement avant qu'un état de non-affichage soit atteint est sauvegardé, et
lorsque la clé de contact est activée et que l'affichage pour automobile est de nouveau affiché, les pages de fonctions de véhicule (P1-P3) sont affichées dans un même état d'affichage que l'état d'affichage sauvegardé.

3. Affichage pour automobile selon la revendication 1, dans lequel :
une fois qu'un actionnement consistant à faire glisser l'un des onglets (T1-T3) affichés dans la zone d'onglets vers le haut sur l'écran est reçu, une extrémité supérieure de l'une des pages de fonctions de véhicule correspondant à l'onglet se déplace automatiquement vers une extrémité supérieure de la zone d'affichage agrandie sans s'arrêter au milieu, et la page de fonctions de véhicule est affichée de manière agrandie dans la zone d'affichage agrandie, et
une fois qu'un actionnement consistant à faire glisser l'onglet (T1-T3) de la page de fonctions de véhicule (P1-P3) affichée de manière agrandie dans la zone d'affichage agrandie vers le bas sur l'écran est reçu, l'extrémité supérieure de la page de fonctions de véhicule se déplace automatiquement vers la zone d'onglets sans s'arrêter au milieu.

4. Affichage pour automobile selon la revendication 1, dans lequel une animation est affichée dans une condition spécifique lorsque toutes les pages de fonctions de véhicule (P1-P3) sont affichées d'une manière réduite en taille.

5. Affichage pour automobile selon la revendication 4, dans lequel une vitesse de l'animation est plus élevée pendant l'arrêt que pendant le déplacement d'une automobile dans laquelle l'affichage pour automobile est monté.
